# EUROPEAN PATENT SPECIFICATION

(11) **EP 2 997 833 B1**
(45) Date of publication and mention of the grant of the patent: **31.01.2018**
(21) Application number: 14185739.1
(22) Date of filing: 22.09.2014
(51) Int. Cl.: A23P 10/43, C09C 1/02, C01F 11/18, A23L 5/00

(54) **Surface-reacted calcium carbonate for use as anti-caking agent**
Oberflächenreaktives Calciumkarbonat zur Verwendung als Trennmittel
Carbonate de calcium traité par réaction en surface pour une utilisation en tant qu'agent anti-agglomérant

(43) Date of publication of application: 23.03.2016
(73) Proprietor: Omya International AG, 4665 Oftringen (CH)
(72) Inventor: Budde, Tanja, 4805 Brittnau (CH)
(74) Representative: Müller-Dyck, Martina

(56) References cited:
- EP-A1- 1 249 271
- EP-A1- 2 578 272
- EP-A1- 2 883 573
- WO-A1-2009/114227
- WO-A1-2010/037753
- WO-A1-2010/051458
- WO-A1-2013/165600
- DE-A1- 19 517 498
- US-A- 5 149 552
- US-A1- 2003 213 937
- "Scientific Opinion on re-evaluation of calcium carbonate (E 170) as a food additive EFSA Panel on Food Additives and Nutrient Sources added to Food (ANS)", EFSA Journal EFSA Journal, 1 January 2011 (2011-01-01), pages 4-73, XP055171488, DOI: 10.2903/j.efsa.2011.2318 Retrieved from the Internet: URL:http://www.efsa.europa.eu/en/efsajourn al/doc/2318.pdf [retrieved on 2015-02-23]

## Description

The present invention relates to the use of a surface-reacted calcium carbonate as anti-caking agent, to a method for preventing caking, to a composition comprising the anti-caking agent, wherein the composition is selected from the group consisting of a food composition, a feed composition, a nutraceutical composition and a cosmetic composition, as well as to a method for the production of such a composition.

Compositions in particulate form like salt, sugar, pudding powder or packet soup often agglomerate, a phenomenon also known as caking. Caking can occur at nearly any temperature and nearly any relative humidity, but most of the time a higher temperature or a higher relative humidity will result in a more pronounced caking problem. This is often the case if the storage conditions are not controlled, for example, in powdered compositions like salt, sugar or spices in private households. Usually, these compositions or products are sold in paper bags or cardboard boxes, which are air and moisture permeable, and are stored in the kitchen cupboard, and, therefore, are delivered to the environmental conditions in the cupboard without protection or control.

Caking results in the hardening of such particulate compositions and in a certain period of time aggregates or lumps are formed within the particulate compositions. This aggregation may result in many problems and economical losses. For example, caked powders are not suitable for further blending or cannot be properly discharged in automated installations. These products must then be processed with a hammer mill, or remelted or simply thrown away, which can create enormous additional costs and wasted resources. Customers often consider it as a loss of quality if particulate compositions like salt or sugar are not flowable anymore after some time but form lumps in the packaging.

Today most producers use anti-caking agents in order to control, reduce or prevent the caking of particulate matter such as powders or granules.

Examples of typical anti-caking additives are wheat flour, native starch, calcium carbonate, phosphates, silicon dioxide, or calcium silicate. For example, US 5,149,552 discloses calcium salts of citric acid that can be used as anti-caking agents in fructose-sweetened powdered soft drinks. In EP 1 249 271 alkali oxides or earth alkali hydroxides like MgO, CaO, Mg(OH)₂, Ca(OH)₂, Mg(OH)₂-Ca(OH)₂ and mixtures thereof are used as anti-caking additives in powdered compositions. US 3,273,960 discloses alkaline earth metal hyperphosphates that can be used as anti-caking agents in particulated salts such as monocalcium orthophosphate monohydrate (MCP). US 2004/0109927 discloses carbonate-based anti-caking agents comprising a carbonate-based core material and an encapsulating agent that possesses hydrophobic properties. Depending on the field of application, these anti-caking agents have sometimes to be used in high amounts to control, reduce or prevent caking in the desired compositions.

WO 2013/165600 relates to non-cementitious compositions, products, methods of making, and using include a carbonate additive comprising vaterite. The carbonate composition may be employed as anti-caking agent in food compositions.

WO 2010/051458 relates to non-cementitious CO₂ sequestering compositions that include a CO₂ sequestering additive, e.g., a CO₂ sequestering carbonate composition. The carbonate composition may be employed as anti-caking agent in food compositions.

US 2003/213937 relates to precipitated aragonite and a process for producing it that may be used as anti-caking agents in food and feed compositions.

WO 2009/114227 relates to the use of magnesium stearate dehydrate for lubrication of solid industrial or consumer products. The lubricating compositions comprising the magnesium stearate dehydrate may be used as anti-caking agents.

US 5 149 552 relates to a calcium salt of citric acid that is prepared and used as an anticaking agent in fructose-sweetened powdered soft drinks. Also included are the processes for preparing the calcium salt and powdered beverage mixes containing the salt.

However, in many fields of application and especially in food industry additives like anti-caking agents have to be labelled in the list of ingredients in the order of the amount contained in the respective composition or product. Therefore, it is desirable to use anti-caking agents in low amounts.

Anti-caking agents that may be used in a reduced amount at good anti-caking efficacy are precipitated silica particles. In EP 0 489 492 sodium borohydride containing a silica-based anti-caking agent is disclosed. Such silica particles (e.g. fumed or precipitated silica particles) can be added in an amount from 0.05 to 2 wt.-%, based on the weight of the sodium borohydride. It is known that precipitated silica consists of primary particles (also called ultimate particles) that are aggregated to secondary particles (also called aggregates). Said primary particles, the precipitated silica consists of, are usually nano-scale particles having a particle size of below 100 nm (Handbook of Fillers for Plastic, edited by Harry S. Katz and John V. Milewski, Van Nostrand Reinhold, ISBN 0-442-26024-5, p. 170, chapter 2.2.2. Particle Size). For example, the silica-based anti-caking agent in EP 0 489 492 has primary particles in the range of 1 to 20 nm.
However, nano-scale particles are a very controversial, emotional topic of discussion in the food, feed, nutraceutical and cosmetic fields. Depending on a chosen material, it may not yet have been clarified if its nano-scale particles are harmful to human health and, therefore, products labelled in this way may be refused by the consumers. Furthermore, it is currently intensely discussed by the European Food Safety Authority (EFSA) whether food ingredients containing certain nano-scale particles should be specifically labelled on the final packaging.
In view of the foregoing, there is a continuous need for agents that can control, reduce or prevent caking and avoid the disadvantages of the prior art. The invention is best described in the claims. Accordingly, it is an object of the present invention to provide agents that can be used for controlling, reducing or preventing caking of particulate compositions. It is another object of the present invention to provide anti-caking agents which provide a good anti-caking efficacy at low concentration.

It is also an object of the present invention to provide anti-caking agents that do not comprise or consist of nano-scale particles. It is also an object of the present invention to provide anti-caking agents that are non-toxic and, therefore, can be employed in compositions which are intended to be used in food compositions, feed compositions, nutraceutical compositions or cosmetic compositions. Another object of the present invention is to provide anti-caking agents that can be easily manufactured at low costs.
The foregoing and other objects are solved by the subject-matter as defined herein in the independent claims.
According to one aspect of the present invention, a use of a surface-reacted calcium carbonate as anti-caking agent is provided, wherein the surface-reacted calcium carbonate is a reaction product of natural ground or precipitated calcium carbonate with carbon dioxide and at least one acid in an aqueous medium, wherein the at least one acid is selected from the group consisting of hydrochloric acid, sulphuric acid, sulphurous acid, phosphoric acid, citric acid, oxalic acid, acetic acid, formic acid, and mixtures thereof, wherein the carbon dioxide is formed in situ by the acid treatment and/or is supplied from an external source and wherein the surface-reacted calcium carbonate particles have a volume median grain diameter d50 of from 0.1 to 50 µm. According to another aspect of the present invention a method for controlling, reducing or preventing caking of a particulate composition is provided, the method comprising the step of adding to a particulate composition a surface-reacted calcium carbonate, wherein the surface-reacted calcium carbonate is a reaction product of natural ground or precipitated calcium carbonate with carbon dioxide and at least one acid in an aqueous medium, wherein the at least one acid is selected from the group consisting of hydrochloric acid, sulphuric acid, sulphurous acid, phosphoric acid, citric acid, oxalic acid, acetic acid, formic acid, and mixtures thereof, wherein the carbon dioxide is formed in situ by the acid treatment and/or is supplied from an external source and wherein the surface-reacted calcium carbonate particles have a volume median grain diameter d50 of from 0.1 to 50 µm. According to still another aspect of the present invention, a composition comprising an anti-caking agent is provided, wherein the anti-caking agent contains surface-reacted calcium carbonate, wherein the surface-reacted calcium carbonate is a reaction product of natural ground or precipitated calcium carbonate with carbon dioxide and at least one acid in an aqueous medium, wherein the at least one acid is selected from the group consisting of hydrochloric acid, sulphuric acid, sulphurous acid, phosphoric acid, citric acid, oxalic acid, acetic acid, formic acid, and mixtures thereof, wherein the carbon dioxide is formed in situ by the acid treatment and/or is supplied from an external source and wherein the surface-reacted calcium carbonate particles have a volume median grain diameter d50 of from 0.1 to 50 µm, wherein the composition is selected from the group consisting of a food composition,
a feed composition, a nutraceutical composition and a cosmetic composition, wherein the food composition is not a chewable gum. According to still another aspect of the present invention a method for the production of a compositions is provided, the method comprising the step of mixing a surface-reacted calcium carbonate with a composition selected from the group consisting of a food composition, a feed composition, a nutraceutical composition and a cosmetic composition, wherein the food composition is not a chewable gum, and wherein the surface-reacted calcium carbonate is a reaction product of natural ground or precipitated calcium carbonate with carbon dioxide and at least one acid in an aqueous medium, wherein the at least one acid is selected from the group consisting of hydrochloric acid, sulphuric acid, sulphurous acid, phosphoric acid, citric acid, oxalic acid, acetic acid, formic acid, and mixtures thereof, wherein the carbon dioxide is formed in situ by the acid treatment and/or is supplied from an external source, and wherein the surface-reacted calcium carbonate particles have a volume median grain diameter d50 of from 0.1 to 50 µm. Advantageous embodiments of the present invention are defined in the corresponding sub-claims.
According to one embodiment the natural ground calcium carbonate is selected from calcium carbonate containing minerals, preferably selected from the group consisting of marble, chalk, dolomite, limestone, and mixtures thereof. According to another embodiment the precipitated calcium carbonate is selected from the group consisting of precipitated calcium carbonates having aragonitic, vateritic or calcitic mineralogical crystal forms, and mixtures thereof.
According to one embodiment the surface-reacted calcium carbonate has a specific surface area of from 1 m²/g to 200 m²/g, preferably from 20 m²/g to 180 m²/g, more preferably from 30 m²/g to 160 m²/g, even more preferably from 40 m²/g to 150 m²/g, and most preferably from 50 m²/g to 140 m²/g, measured using nitrogen and the BET method according to ISO 9277. According to another embodiment the surface-reacted calcium carbonate particles have a volume median grain diameter *d*₅₀ of from 0.1 to 50 µm, preferably from 0.5 to 25 µm, more preferably from 0.8 to 20 µm, even more preferably from 1 to 10 µm, and most preferably from 4 to 8 µm. According to still another embodiment the surface-reacted calcium carbonate has an intra-particle intruded specific pore volume within the range of 0.150 to 1.300 cm³/g, preferably of 0.300 to 1.250 cm³/g, and most preferably of 0.400 to 1.210 cm³/g, calculated from a mercury intrusion porosimetry measurement.

According to the present invention the at least one acid is selected from the group consisting of hydrochloric acid, sulphuric acid, sulphurous acid, phosphoric acid, citric acid, oxalic acid, acetic acid, formic acid, and mixtures thereof, preferably the at least one acid is selected from the group consisting of hydrochloric acid, sulphuric acid, sulphurous acid, phosphoric acid, oxalic acid, and mixtures thereof, and more preferably the at least one acid is phosphoric acid or a mixture of phosphoric acid and citric acid.
According to one embodiment the anti-caking agent is used in a composition selected from the group consisting of a food composition, a feed composition, a nutraceutical composition and a cosmetic composition, and preferably the composition is selected from a food composition or a feed composition. According to one embodiment the food composition is food salt, curing salt, salt substitute, milk powder, skimmed milk powder, cream powder, egg powder, whey fat powder, protein powder, vending machine powder, grated cheese, sugar, powdered food flavour, spice, seasoning, packet soup mixture, baking mixture, pudding powder, mousse powder, or sauce powder. According to another embodiment the feed composition is pet food, milk replacer for animals, or mineral salt for animals. According to still another embodiment the surface-reacted calcium carbonate is present in the composition in an amount between 0.1 and 10 wt.-%, preferably in an amount between 0.2 and 5 wt.-%, more preferably in an amount between 0.3 and 3 wt.-%, and most preferably in an amount between 0.5 and 2.5 wt.-%, based on the total weight of the composition.
It should be understood that for the purpose of the present invention the following terms have the following meaning.

For the purpose of the present invention, an "acid" is defined as Brønsted-Lowry acid, that is to say, it is an H₃O⁺ ion provider. An "acid salt" is defined as an H₃O⁺ ion-provider, e.g., a hydrogen-containing salt, which is partially neutralised by an electropositive element. A "salt" is defined as an electrically neutral ionic compound formed from anions and cations. A "partially crystalline salt" is defined as a salt that, on XRD analysis, presents an essentially discrete diffraction pattern.

In accordance with the present invention, pKₐ is the symbol representing the acid dissociation constant associated with a given ionisable hydrogen in a given acid, and is indicative of the natural degree of dissociation of this hydrogen from this acid at equilibrium in water at a given temperature. Such pKₐ values may be found in reference textbooks such as Harris, D. C. "Quantitative Chemical Analysis: 3rd Edition", 1991, W.H. Freeman & Co. (USA), ISBN 0-7167-2170-8.

"Natural ground calcium carbonate" (GCC) in the meaning of the present invention is a calcium carbonate obtained from natural sources, such as limestone, marble, dolomite, or chalk, and processed through a wet and/or dry treatment such as grinding, screening and/or fractionating, for example, by a cyclone or classifier.

"Precipitated calcium carbonate" (PCC) in the meaning of the present invention is a synthesised material, obtained by precipitation following reaction of carbon dioxide and lime in an aqueous, semi-dry or humid environment or by precipitation of a calcium and carbonate ion source in water. PCC may be in the vateritic, calcitic or aragonitic crystal form.

For the purpose of the present invention, a "surface-reacted calcium carbonate" is a material comprising calcium carbonate and an insoluble, at least partially crystalline, non-carbonate calcium salt, preferably, extending from the surface of at least part of the calcium carbonate. The calcium ions forming said at least partially crystalline non-carbonate calcium salt originate largely from the starting calcium carbonate material that also serves to form the surface-reacted calcium carbonate core. Such salts may include OH⁻ anions and/or crystal water.

In the meaning of the present invention "water-insoluble" materials are defined as materials which, when mixed with deionised water and filtered on a filter having a 0.2 µm pore size at 20°C to recover the liquid filtrate, provide less than or equal to 0.1 g of recovered solid material following evaporation at 95 to 100°C of 100 g of said liquid filtrate. "Water-soluble" materials are defined as materials leading to the recovery of greater than 0.1 g of recovered solid material following evaporation at 95 to 100°C of 100 g of said liquid filtrate.

Throughout the present document, the "particle size" of a calcium carbonate and other materials is described by its distribution of particle sizes. The value *dₓ* represents the diameter relative to which *x* % by weight of the particles have diameters less than *dₓ*. This means that the *d*₂₀ value is the particle size at which 20 wt.-% of all particles are smaller, and the *d*₇₅ value is the particle size at which 75 wt.-% of all particles are smaller. The *d*₅₀ value is thus the weight median particle size, i.e. 50 wt.-% of all grains are bigger or smaller than this particle size. For the purpose of the present invention the particle size is specified as weight median particle size *d*₅₀ unless indicated otherwise. For determining the weight median particle size *d*₅₀ value a Sedigraph can be used. For the purpose of the present invention, the "particle size" of surface-reacted calcium is described as volume determined particle size distributions. For determining the volume determined particle size distribution, e.g., the volume median grain diameter (*d*₅₀) or the volume determined top cut particle size (*d*₉₈) of surface-reacted calcium carbonate, a Malvern Mastersizer 2000 can be used. The weight determined particle size distribution may correspond to the volume determined particle size if the density of all the particles is equal.

A "nano-scale particle" in the meaning of the present invention refers to fine particles with at least one dimension less than 200 nm.

A "specific surface area (SSA)" of a calcium carbonate in the meaning of the present invention is defined as the surface area of the calcium carbonate divided by its mass. As used herein, the specific surface area is measured by nitrogen gas adsorption using the BET isotherm (ISO 9277:2010) and is specified in m²/g.

An "anti-caking agent" in the meaning of the present invention refers to an agent or additive that can be added to particulate compositions such as dust, powders or granules and controls, reduces or prevents the agglomeration or caking of these compositions. More precisely, the formation of aggregates or lumps within particulate compositions is controlled, reduced or prevented by the addition of the anti-caking agent to the particulate compositions.

For the purpose of the present invention the "porosity" or "pore volume" refers to the intra-particle intruded specific pore volume. The porosity or pore volume is measured using a Micromeritics Autopore IV 9500 mercury porosimeter having a maximum applied pressure of 414 MPa (60 000 psi), equivalent to a Laplace throat diameter of 0.004 µm.

A "suspension" or "slurry" in the meaning of the present invention comprises insoluble solids and water, and optionally further additives, and usually contains large amounts of solids and, thus, is more viscous and can be of higher density than the liquid from which it is formed.

Where the term "comprising" is used in the present description and claims, it does not exclude other elements. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Where an indefinite or definite article is used when referring to a singular noun, e.g. "a", "an" or "the", this includes a plural of that noun unless something else is specifically stated.

Terms like "obtainable" or "definable" and "obtained" or "defined" are used interchangeably. This e.g. means that, unless the context clearly dictates otherwise, the term "obtained" does not mean to indicate that e.g. an embodiment must be obtained by e.g. the sequence of steps following the term "obtained" though such a limited understanding is always included by the terms "obtained" or "defined" as a preferred embodiment.

According to the present invention it has been found that calcium carbonate, which has been surface treated in a certain way, can be used as anti-caking agent. Thus, according to the present invention the use of a surface-reacted calcium carbonate as anti-caking agent is provided, wherein the surface-reacted calcium carbonate is a reaction product of natural ground or precipitated calcium carbonate with carbon dioxide and at least one acid, wherein the carbon dioxide is formed in situ by the acid treatment and/or is supplied from an external source.

In the following the details and preferred embodiments of the inventive use of the surface-reacted calcium carbonate as anti-caking agent will be set out in more detail. It is to be understood that these technical details and embodiments also apply to the inventive method for controlling, reducing or preventing caking of a particulate composition, to the inventive compositions comprising said anti-caking agent as well as to the inventive method for the production of these compositions.

### The surface-reacted calcium carbonate

The surface-reacted calcium carbonate used according to the present invention is a reaction product of natural ground or precipitated calcium carbonate with carbon dioxide and at least one acid in an aqueous medium, wherein the carbon dioxide is formed in situ by the acid treatment and/or is supplied from an external source.

The expression "acid treatment" in the meaning of the present invention refers to the reaction of the natural ground or precipitated calcium carbonate and the at least one acid in the aqueous medium. By this reaction carbon dioxide can be formed in-situ in the aqueous medium.

Natural ground calcium carbonate (GCC) is understood to be a naturally occurring form of calcium carbonate, mined from sedimentary rocks such as limestone or chalk, or from metamorphic marble rocks. Calcium carbonate is known to exist mainly as three types of crystal polymorphs: calcite, aragonite and vaterite. Calcite, the most common crystal polymorph, is considered to be the most stable crystal form of calcium carbonate. Less common is aragonite, which has a discrete or clustered needle orthorhombic crystal structure. Vaterite is the rarest calcium carbonate polymorph and is generally unstable. Natural calcium carbonate is almost exclusively of the calcitic polymorph, which is said to be trigonal-rhombohedral and represents the most stable of the calcium carbonate polymorphs. The term "source" of the calcium carbonate in the meaning of the present invention refers to the naturally occurring mineral material from which the calcium carbonate is obtained. The source of the calcium carbonate may comprise further naturally occurring components such as magnesium carbonate, alumino silicate etc.

According to one embodiment the natural ground calcium carbonate is selected from calcium carbonate containing minerals selected from the group consisting of marble, chalk, dolomite, limestone, and mixtures thereof.

According to one embodiment of the present invention the GCC is obtained by dry grinding. According to another embodiment of the present invention the GCC is obtained by wet grinding and optionally subsequent drying.

In general, the grinding step can be carried out with any conventional grinding device, for example, under conditions such that comminution predominantly results from impacts with a secondary body, i.e. in one or more of: a ball mill, a rod mill, a vibrating mill, a roll crusher, a centrifugal impact mill, a vertical bead mill, an attrition mill, a pin mill, a hammer mill, a pulveriser, a shredder, a de-clumper, a knife cutter, or other such equipment known to the skilled man. In case the calcium carbonate containing mineral material comprises a wet ground calcium carbonate containing mineral material, the grinding step may be performed under conditions such that autogenous grinding takes place and/or by horizontal ball milling, and/or other such processes known to the skilled man. It is to be noted that the same grinding methods can be used for dry grinding the calcium carbonate containing mineral material. The wet processed ground calcium carbonate containing mineral material thus obtained may be washed and dewatered by well-known processes, e.g. by flocculation, filtration or forced evaporation prior to drying. The subsequent step of drying may be carried out in a single step such as spray drying, or in at least two steps. It is also common that such a mineral material undergoes a beneficiation step (such as a flotation, bleaching or magnetic separation step) to remove impurities.

"Precipitated calcium carbonate" (PCC) in the meaning of the present invention is a synthesized material, generally obtained by precipitation following reaction of carbon dioxide and lime in an aqueous environment or by precipitation of a calcium and carbonate ion source in water or by precipitation of calcium and carbonate ions, for example CaCl₂ and Na₂CO₃, out of solution. Further possible ways of producing PCC are the lime soda process, or the Solvay process in which PCC is a by-product of ammonia production. Precipitated calcium carbonate exists in three primary crystalline forms: calcite, aragonite and vaterite, and there are many different polymorphs (crystal habits) for each of these crystalline forms. Calcite has a trigonal structure with typical crystal habits such as scalenohedral (S-PCC), rhombohedral (R-PCC), hexagonal prismatic, pinacoidal, colloidal (C-PCC), cubic, and prismatic (P-PCC). Aragonite is an orthorhombic structure with typical crystal habits of twinned hexagonal prismatic crystals, as well as a diverse assortment of thin elongated prismatic, curved bladed, steep pyramidal, chisel shaped crystals, branching tree, and coral or worm-like form. Vaterite belongs to the hexagonal crystal system. The obtained PCC slurry can be mechanically dewatered and dried.

According to one embodiment of the present invention, the precipitated calcium carbonate is selected from the group consisting of precipitated calcium carbonates having aragonitic, vateritic or calcitic mineralogical crystal forms, and mixtures thereof.

In a preferred embodiment, the natural ground or precipitated calcium carbonate is ground prior to the treatment with the at least one acid and carbon dioxide. The grinding step can be carried out with any conventional grinding device such as a grinding mill known to the skilled person.

In a preferred process, the natural ground or precipitated calcium carbonate, either finely divided, such as by grinding, or not, is suspended in water. Preferably, the slurry has a content of natural ground or precipitated calcium carbonate within the range of 1 wt.-% to 80 wt.-%, more preferably 3 wt.-% to 60 wt.-%, and even more preferably 5 wt.-% to 40 wt.-%, based on the weight of the slurry.

According to the present invention, the natural ground or precipitated calcium carbonate has a weight median particle size *d*₅₀ of from 0.1 to 50 µm, preferably from 0.5 to 25 µm, more preferably from 0.8 to 20 µm, even more preferably from 1.0 to 10 µm and most preferably from 1.2 to 8 µm.

In a next step, at least one acid is added to the aqueous suspension containing the natural ground or precipitated calcium carbonate. The at least one acid can be any strong acid, medium-strong acid, or weak acid, or mixtures thereof, generating H₃O⁺ ions under the preparation conditions. According to the present invention, the at least one acid can also be an acidic salt, generating H₃O⁺ ions under the preparation conditions.

According to one embodiment, the at least one acid is a strong acid having a pKₐ of 0 or less at 20°C. According to another embodiment, the at least one acid is a medium-strong acid having a pKₐ value from 0 to 2.5 at 20°C. If the pKₐ at 20°C is 0 or less, the acid is preferably selected from sulphuric acid, hydrochloric acid, or mixtures thereof. If the pKₐ at 20°C is from 0 to 2.5, the acid is preferably selected from H₂SO₃, H₃PO₄, oxalic acid, or mixtures thereof. According to a preferred embodiment, the least one acid is H₃PO₄. The at least one acid can also be an acidic salt, for example, HSO₄⁻ or H₂PO₄⁻, being at least partially neutralized by a corresponding cation such as Li⁺, Na⁺ or K⁺, or HPO₄²⁻, being at least partially neutralised by a corresponding cation such as Li⁺, Na⁺, K⁺, Mg²⁺ or Ca²⁺. The at least one acid can also be a mixture of one or more acids and one or more acidic salts.

According to still another embodiment, the at least one acid is a weak acid having a pKₐ value of greater than 2.5 and less than or equal to 7, when measured at 20°C, associated with the ionisation of the first available hydrogen, and having a corresponding anion formed on loss of this first available hydrogen, which is capable of forming water-soluble calcium salts. According to the preferred embodiment, the weak acid has a pKₐ value from 2.6 to 5 at 20°C, and more preferably the weak acid is selected from the group consisting of acetic acid, formic acid, propanoic acid, and mixtures thereof.

In case a weak acid is used, after addition of said acid to the aqueous suspension containing the natural ground or precipitated calcium carbonate, at least one water-soluble salt, which in the case of a hydrogen-containing salt has a pKₐ of greater than 7, when measured at 20°C, associated with the ionisation of the first available hydrogen, and the salt anion of which is capable of forming water-insoluble calcium salts, is additionally added. The cation of said water-soluble salt is preferably selected from the group consisting of potassium, sodium, lithium and mixtures thereof. In a more preferred embodiment, said cation is sodium. It is of note that depending on the charge of the anion, more than one of said cations may be present to provide an electrically neutral ionic compound. The anion of said water-soluble salt is preferably selected from the group consisting of phosphate, dihydrogen phosphate, monohydrogen phosphate, oxalate, silicate, mixtures thereof and hydrates thereof. In a more preferred embodiment, said anion is selected from the group consisting of phosphate, dihydrogen phosphate, monohydrogen phosphate, mixtures thereof and hydrates thereof. In a most preferred embodiment, said anion is selected from the group consisting of dihydrogen phosphate, monohydrogen phosphate, mixtures thereof and hydrates thereof. Water-soluble salt addition may be performed dropwise or in one step. In the case of drop wise addition, this addition preferably takes place within a time period of 15 minutes. It is more preferred to add said salt in one step.

According to the present invention of the present invention, the at least one acid is selected from the group consisting of hydrochloric acid, sulphuric acid, sulphurous acid, phosphoric acid, citric acid, oxalic acid, acetic acid, formic acid, and mixtures thereof. Preferably the at least one acid is selected from the group consisting of hydrochloric acid, sulphuric acid, sulphurous acid, phosphoric acid, oxalic acid, H₂PO₄⁻, being at least partially neutralised by a corresponding cation such as Li⁺, Na⁺ or K⁺, HPO₄²⁻, being at least partially neutralised by a corresponding cation such as Li⁺, Na⁺, K⁺, Mg²⁺ or Ca²⁺, and mixtures thereof, more preferably the at least one acid is selected from the group consisting of hydrochloric acid, sulphuric acid, sulphurous acid, phosphoric acid, oxalic acid, or mixtures thereof, and most preferably, the at least one acid is phosphoric acid.

According to another embodiment of the present invention, the at least one acid is a mixture of one or more acids. For example, the at least one acid is a mixture of phosphoric acid and citric acid. The one or more acids may be added simultaneously or successively.

The at least one acid can be added to the suspension as a concentrated solution or a more diluted solution. According to one embodiment, the molar ratio of the at least one acid to the natural ground or precipitated calcium carbonate is from 0.01 to 0.6, preferably from 0.05 to 0.55, and more preferably from 0.1 to 0.5. As an alternative, it is also possible to add the at least one acid to the water before the natural ground or precipitated calcium carbonate is suspended.

In a next step, the natural ground or precipitated calcium carbonate is treated with carbon dioxide. The carbon dioxide can be formed in situ by the acid treatment and/or can be supplied from an external source. If a strong acid such as sulphuric acid or hydrochloric acid or a medium-strong acid such as phosphoric acid is used for the acid treatment of the natural ground or precipitated calcium carbonate, the carbon dioxide is automatically formed in a sufficient amount to achieve the required molar concentration. Alternatively or additionally, the carbon dioxide can be supplied from an external source.

According to one embodiment, the surface-reacted calcium carbonate is a reaction product of natural ground or precipitated calcium carbonate with carbon dioxide and at least one acid, wherein the carbon dioxide is formed in situ as a result of contacting the at least one acid with the natural ground or precipitated calcium carbonate and/or is supplied from an external source.

Acid treatment and treatment with carbon dioxide can be carried out simultaneously which is the case when a strong or medium-strong acid is used. It is also possible to carry out acid treatment first, e.g. with a medium strong acid having a pKₐ in the range of 0 to 2.5 at 20°C, wherein carbon dioxide is formed in situ, and thus, the carbon dioxide treatment will automatically be carried out simultaneously with the acid treatment, followed by the additional treatment with carbon dioxide supplied from an external source.

Preferably, the concentration of gaseous carbon dioxide in the suspension is, in terms of volume, such that the ratio (volume of suspension):(volume of gaseous CO₂) is from 1:0.05 to 1:20, even more preferably from 1:0.05 to 1:5.

In a preferred embodiment, the acid treatment step and/or the carbon dioxide treatment step are repeated at least once, more preferably several times.

Subsequent to the acid treatment and carbon dioxide treatment, the pH of the aqueous suspension, measured at 20°C, naturally reaches a value of greater than 6.0, preferably greater than 6.5, more preferably greater than 7.0, even more preferably greater than 7.5, thereby preparing the surface-reacted natural ground or precipitated calcium carbonate as an aqueous suspension having a pH of greater than 6.0, preferably greater than 6.5, more preferably greater than 7.0, even more preferably greater than 7.5. If the aqueous suspension is allowed to reach equilibrium, the pH is greater than 7. A pH of greater than 6.0 can be adjusted without the addition of a base when stirring of the aqueous suspension is continued for a sufficient time period, preferably 1 hour to 10 hours, more preferably 1 to 5 hours.

Alternatively, prior to reaching equilibrium, which occurs at a pH greater than 7, the pH of the aqueous suspension may be increased to a value greater than 6 by adding a base subsequent to carbon dioxide treatment. Any conventional base such as sodium hydroxide or potassium hydroxide can be used.

Further details about the preparation of the surface-reacted calcium carbonate are disclosed in WO 00/39222, WO 2004/083316, WO 2005/121257, WO 2009/074492, EP 2 264 108, EP 2 264 109 and US 2004/0020410.

Similarly, surface-reacted precipitated calcium carbonate is obtained. As can be taken in detail from EP 2 070 991, surface-reacted precipitated calcium carbonate is obtained by contacting precipitated calcium carbonate with H₃O⁺ ions and with anions being solubilized in an aqueous medium and being capable of forming water-insoluble calcium salts, in an aqueous medium to form a slurry of surface-reacted precipitated calcium carbonate, wherein said surface-reacted precipitated calcium carbonate comprises an insoluble, at least partially crystalline calcium salt of said anion formed on the surface of at least part of the precipitated calcium carbonate.

Said solubilized calcium ions correspond to an excess of solubilized calcium ions relative to the solubilized calcium ions naturally generated on dissolution of precipitated calcium carbonate by H₃O⁺ ions, where said H₃O⁺ ions are provided solely in the form of a counterion to the anion, i.e. via the addition of the anion in the form of an acid or non-calcium acid salt, and in absence of any further calcium ion or calcium ion generating source.

Said excess solubilized calcium ions are preferably provided by the addition of a soluble neutral or acid calcium salt, or by the addition of an acid or a neutral or acid non-calcium salt which generates a soluble neutral or acid calcium salt in situ.

Said H₃O⁺ ions may be provided by the addition of an acid or an acid salt of said anion, or the addition of an acid or an acid salt which simultaneously serves to provide all or part of said excess solubilized calcium ions.

According to one embodiment of the present invention, the surface-reacted calcium carbonate is obtained by a process comprising the steps of:
a) providing a suspension of natural ground or precipitated calcium carbonate,
b) adding at least one acid having a pKₐ value of 0 or less at 20°C or having a pKₐ value from 0 to 2.5 at 20°C to the suspension of step a), and
c) treating the suspension of step a) with carbon dioxide before, during or after step b).

According to one embodiment, at least one acid having a pKₐ value of 0 or less at 20°C is added in step b) to the suspension of step a). According to another embodiment, at least one acid having a pKₐ value from 0 to 2.5 at 20°C is added in step b) to the suspension of step a).

The carbon dioxide used in step c) can be formed in situ by the acid treatment of step b) and/or can be supplied from an external source.

According to one embodiment of the present invention, the surface-reacted calcium carbonate is obtained by a process comprising the steps of:
A) providing a natural ground or precipitated calcium carbonate,
B) providing at least one water-soluble acid,
C) providing gaseous CO₂,
D) contacting said natural ground or precipitated calcium carbonate of step A) with the at least one acid of step B) and with the CO₂ of step C),
characterised in that:
i) the at least one acid of step B) has a pKₐ of greater than 2.5 and less than or equal to 7 at 20°C, associated with the ionisation of its first available hydrogen, and a corresponding anion is formed on loss of this first available hydrogen capable of forming a water-soluble calcium salt, and
ii) following contacting the at least one acid with natural ground or precipitated calcium carbonate, at least one water-soluble salt, which in the case of a hydrogen-containing salt has a pKₐ of greater than 7 at 20°C, associated with the ionisation of the first available hydrogen, and the salt anion of which is capable of forming water-insoluble calcium salts, is additionally provided.

According to one embodiment of the preparation of the surface-reacted natural ground or precipitated calcium carbonate, the natural ground or precipitated calcium carbonate is reacted with the at least one acid and/or the carbon dioxide in the presence of at least one compound selected from the group consisting of silicate, magnesium oxide, citric acid, aluminium sulphate, aluminium nitrate, aluminium chloride, and mixtures thereof. These components can be added to an aqueous suspension comprising the natural ground or precipitated calcium carbonate before adding the at least one acid and/or carbon dioxide.

The aqueous suspension described above will be dried afterwards. The subsequent step of drying may be carried out by any method known to the skilled person. For example, the drying can be carried out in a single step such as spray drying, or in at least two steps, e.g. by applying a first heating step to the surface-reacted calcium carbonate in order to reduce the associated moisture content, and applying a second heating step to the surface-reacted calcium carbonate in order to reduce the remaining moisture content.

The term "dry" surface-reacted calcium carbonate is understood to be a surface-reacted calcium carbonate having less than 1.8 % by weight of water relative to the surface-reacted calcium carbonate weight. The % water may be determined by heating the surface-reacted calcium carbonate to 105°C in a drying chamber using the method according to ISO 787-2.

The surface-reacted natural ground or precipitated calcium carbonate to be used in the present invention is provided in dry form. The surface-reacted calcium carbonate is preferably in the form of dust or powder and most preferably in the form of powder.

According to one embodiment of the present invention, the surface-reacted calcium carbonate comprises an insoluble, at least partially crystalline calcium salt of an anion of the at least one acid, which is formed on the surface of the natural ground or precipitated calcium carbonate. According to one embodiment, the insoluble, at least partially crystalline salt of an anion of the at least one acid covers the surface of the natural ground or precipitated calcium carbonate at least partially, preferably completely. Depending on the employed at least one acid, the anion may be sulphate, sulphite, phosphate, citrate, oxalate, acetate and/or formiate.

According to one preferred embodiment, the surface-reacted calcium carbonate is a reaction product of natural ground calcium carbonate and at least one acid, preferably phosphoric acid. According to another preferred embodiment, the surface-reacted calcium carbonate is a reaction product of natural ground calcium carbonate and phosphoric acid in combination with citric acid.

Furthermore, in a preferred embodiment, the surface-reacted calcium carbonate has a specific surface area of from 1 m²/g to 200 m²/g, preferably from 20 m²/g to 180 m²/g, more preferably from 30 to 160 m²/g, even more preferably from 40 m²/g to 150 m²/g, and most preferably from 50 m²/g to 140 m²/g, measured using nitrogen and the BET method according to ISO 9277.

According to one embodiment, the surface-reacted calcium carbonate has a volume median grain diameter *d*₅₀ of from 0.1 to 50 µm, preferably from 0.5 to 25 µm, more preferably from 0.8 to 20 µm, even more preferably from 1 to 10 µm, and most preferably from 4 to 8 µm. According to another embodiment, the surface-reacted calcium carbonate has a volume median grain diameter *d*₅₀ of from 0.1 to 50 µm, preferably from 0.5 to 45 µm, more preferably from 1 to 40 µm, and most preferably from 5 to 35 µm. Preferably, the volume median grain diameter is measured with a Malvern Mastersizer 2000 Laser Diffraction System. The method and the instrument are known to the skilled person and are commonly used to determine grain sizes of fillers and pigments.

Preferably, the surface-reacted calcium carbonate has an intra-particle intruded specific pore volume within the range of 0.150 to 1.300 cm³/g, preferably of 0.300 to 1.250 cm³/g, and most preferably of 0.400 to 1.210 cm³/g, calculated from mercury intrusion porosimetry measurement as described in the experimental section. The total pore volume seen in the cumulative intrusion data can be separated into two regions with the intrusion data from 214 µm down to about 1 - 4 µm showing the coarse packing of the sample between any agglomerate structures contributing strongly. Below these diameters lies the fine inter-particle packing of the particles themselves. If they also have intra-particle pores, then this region appears bimodal. The sum of these three regions gives the total overall pore volume of the powder, but depends strongly on the original sample compaction/settling of the powder at the coarse pore end of the distribution. Further details with respect to the porosity or the intra-particle intruded specific pore volume of the surface-reacted calcium carbonate can be found in WO 2010/037753.

According to a preferred embodiment the intra- and/or inter particle pores of the surface-reacted calcium carbonate are hollow and, therefore, the surface-reacted calcium carbonate is unloaded. In other words, the surface-reacted calcium carbonate is not used as a carrying agent.

The surface-reacted calcium carbonate may be in the form of dust or powder and preferably in the form of powder.

According to one embodiment the surface-reacted calcium carbonate does not contain nano-scale particles, e.g. particles with at least one dimension less than 200 nm. According to one embodiment of the present invention, the surface-reacted calcium carbonate does not contain particles that have a number based median particle size *d*₅₀ of less than 200 nm. For determining the number based median particle size *d*₅₀ value, a Malvern Zetasizer Nano ZS can be used employing dynamic light scattering to determine the equivalent spherical hydrodynamic Stokes diameter.

### The use as anti-caking agent

According to the present invention, a use of a surface-reacted calcium carbonate as anti-caking agent is provided, wherein the surface-reacted calcium carbonate is a reaction product of natural ground or precipitated calcium carbonate with carbon dioxide and at least one acid in an aqueous medium, wherein the carbon dioxide is formed in situ by the acid treatment and/or is supplied from an external source.

"Caking" according to the present invention refers to the formation of aggregates or lumps in particulate compositions which results in the hardening of such compositions. "Particulate compositions" according to the present invention are compositions that are in particulate form, e.g. in form of dust, powder, granules or flakes.

The inventors surprisingly found out that a calcium carbonate that has been surface-treated in the above described way can be used as anti-caking agent, i.e. it can be used to control, reduce or prevent the caking of particulate compositions. The surface-reacted calcium carbonate may have a similar or even better anti-caking efficacy than conventional anti-caking agents such as natural ground calcium carbonate, calcium citrate or monocalcium phosphate, which may allow to use the inventive anti-caking agents in reduced amounts in particulate compositions. Without being bound to any theory the inventors believe that the excellent anti-caking properties of the surface-reacted calcium carbonate are due to the high surface area of the surface-reacted calcium carbonate in comparison to the natural ground or precipitated calcium carbonate.

Furthermore, the surface-reacted calcium carbonate of the present invention may have a particle size in the micrometre range. Therefore, by using the surface-reacted calcium carbonate as anti-caking agent, the contamination of particulate materials with nano-scale particles can be avoided.

Finally, the surface-reacted calcium carbonate of the present invention is non-toxic and can be produced in food-grade quality by using food grade source materials. Natural ground or precipitated calcium carbonate is an easy available material having no hazardous effect on health and surface-reacted calcium carbonate can be manufactured thereof in high yield at a very good price/performance ratio.

The surface-reacted calcium carbonate of the present invention can be used in any kind of particulate material as anti-caking agents. For example, the surface-reacted calcium carbonate may be used as anti-caking agent in a food composition, a feed composition, a nutraceutical composition, a cosmetic composition, an agriculture composition, a building material, or a powdered detergent. According to one embodiment of the present invention, the surface-reacted calcium carbonate is used as anti-caking agent in a composition selected from the group consisting of a food composition, a feed composition, a nutraceutical composition, and a cosmetic composition, and preferably the composition is selected from a food composition or a feed composition.

According to another embodiment of the present invention, a composition comprising an anti-caking agent is provided, wherein the anti-caking agent contains surface-reacted calcium carbonate, wherein the surface-reacted calcium carbonate is a reaction product of natural ground or precipitated calcium carbonate with carbon dioxide and at least one acid in an aqueous medium, wherein the carbon dioxide is formed in situ by the acid treatment and/or is supplied from an external source and wherein the composition is selected from the group consisting of a food composition, a feed composition, a nutraceutical composition and a cosmetic composition.

A "composition" according to the present invention refers to any kind of composition including ready-to-use and pre-mix compositions. A pre-mix composition is a mixture to which further components have to be added before use.

A "food composition" according to the present invention is any composition that is intended for human consumption.

According to one embodiment of the present invention the food composition is food salt, curing salt, salt substitute, milk powder, skimmed milk powder, cream powder, egg powder, whey fat powder, protein powder, vending machine powder, grated cheese, sugar, powdered food flavour, spice, seasoning, packet soup mixture, baking mixture, pudding powder, mousse powder, or sauce powder.

Food salt is any salt that comprises NaCl in food-grade quality. Curing salt is a mixture of table salt and sodium nitrite and optionally sodium nitrate. Salt substitutes are low-sodium table salt alternatives to circumvent the risk of high blood pressure and cardiovascular disease. They usually contain mostly potassium chloride or potassium lactate.

Grated cheese may be any cheese that can be produced in grated form, for example, Cheddar, Emmentaler, Gruyère, Edamer, butter cheese, feta, mozzarella, Gouda, or mixtures thereof.

Sugar may be any sugar that that is intended for human consumption, for example, white sugar, fruit sugar, backer sugar, powdered sugar, coarse sugar, sanding sugar, or brown sugar like turbinado sugar, evaporated cane juice, Muscovado or Barbados sugar, or Demerara sugar.

Powder flavourings or powdered food flavours are dried versions of intense liquid flavours and can be used to enhance flavours where liquids may compromise the recipe. Powder flavourings are, for example, obtainable as almond, apple, banana, blackcurrant, cherry, lemon, orange, peach, rhubarb, or strawberry powder flavourings.

A spice is a vegetation product that has an aromatic or pungent to the taste quality which is used for flavouring while cooking. A seasoning is a mixture of several flavouring components such as sugars, salts and spices. Thus, a spice can thought of as a subset of a seasoning. Spices used in the present invention are, for example, pepper, cinnamon, chili, coriander, tomato, fennel seeds, garlic, paprika or vanilla in powdered form or mixtures like curry, or garam masala.

Since food compositions are intended for human consumption these compositions and pre-mixes may contain food-grade ingredients. Therefore, it is preferred that the surface-reacted calcium carbonate that is used as anti-caking agent in such food compositions is obtained from food-grade starting materials, e.g. from food-grade calcium carbonate, food-grade acid and food-grade carbon dioxide. "Food-grade" according to the present invention is any composition or chemical that is approved for use in food, or in the manufacture of products that will be in contact with food. The statutory regulations may thereby differ from one country to another.

A "feed composition" according to the present invention is any composition that is intended for animal consumption.

According to one embodiment of the present invention the feed composition is pet food, milk replacer for animals, or mineral salt for animals. In a preferred embodiment the feed composition is a pet food composition.

According to another embodiment the pet food composition comprises additives selected from the group comprising preservatives, additives like sodium benzoate, dye, vitamin powder, trace elements, amino acids, urea and digestibility enhancers.

"Nutraceutical" is a combination of the words "nutrition" and "pharmaceutical". A "nutraceutical composition" according to the present invention is any composition that is derived from food sources that are purported to provide extra health benefits, in addition to the basic nutritional value found in foods. Such compositions may, for example, prevent chronic diseases, improve health, delay the aging process, increase life expectancy, or support the structure or function of the body.

A "cosmetic composition" according to the present invention is any composition that is intended to be applied to the human body, for example, the hair or skin, for cleansing, beautifying, promoting attractiveness, or altering the appearance without affecting the body's structure or functions.

According to one embodiment the cosmetic composition is a powdered composition like, powdered make-up, powdered eye shadow, powdered rouge, talcum powder, body powder, or dry shampoo.

According to one embodiment the surface-reacted calcium carbonate is present in the composition in an amount between 0.1 and 10 wt.-%, preferably in an amount between 0.2 and 5 wt.-%, more preferably in an amount between 0.3 and 3 wt.-%, and most preferably in an amount between 0.5 and 2.5 wt.-%, based on the total weight of the composition.

According to one embodiment of the present invention a method for controlling, reducing or preventing caking of a particulate composition is provided, the method comprising the step of adding to a particulate compositions at least one surface-reacted calcium carbonate, wherein the surface-reacted calcium carbonate is a reaction product of natural ground or precipitated calcium carbonate with carbon dioxide and at least one acid in an aqueous medium, wherein the carbon dioxide is formed in situ by the acid treatment and/or is supplied from an external source.

Finally, a method for the production of a composition is provided, wherein a surface-reacted calcium carbonate is mixed with a composition selected from the group consisting of a food composition, a feed composition, a nutraceutical composition and a cosmetic composition, wherein the surface-reacted calcium carbonate is a reaction product of natural ground or precipitated calcium carbonate with carbon dioxide and at least one acid in an aqueous medium, wherein the carbon dioxide is formed in situ by the acid treatment and/or is supplied from an external source.

The mixing may be performed in any order but preferably the surface-reacted calcium carbonate is added to the particulate composition. The mixing can be carried out with any conventional mixing device known to the skilled person.

According to a preferred embodiment of the present invention the use of a surface-reacted calcium carbonate as anti-caking agent is provided, wherein the surface-reacted calcium carbonate is a reaction product of natural ground calcium carbonate with carbon dioxide and phosphoric acid in an aqueous medium, wherein the carbon dioxide is formed in situ by the treatment with phosphoric acid and/or is supplied from an external source. According to another preferred embodiment of the present invention the use of a surface-reacted calcium carbonate as anti-caking agent is provided, wherein the surface-reacted calcium carbonate is a reaction product of natural ground calcium carbonate with carbon dioxide and phosphoric acid in combination with citric acid in an aqueous medium, wherein the carbon dioxide is formed in situ by the treatment with phosphoric acid and/or is supplied from an external source. Preferably, the natural ground calcium carbonate has a weight median particle size *d*₅₀ of from 1 to 50 µm and/or the surface-reacted calcium carbonate has a volume median grain diameter *d*₅₀ of from 0.1 to 50 µm.

According to another preferred embodiment of the present invention a composition comprising an anti-caking is provided, wherein the anti-caking agent contains surface-reacted calcium carbonate, wherein the surface-reacted calcium carbonate is a reaction product of natural ground calcium carbonate with carbon dioxide and phosphoric acid, or phosphoric acid in combination with citric acid, in an aqueous medium, wherein the carbon dioxide is formed in situ by the treatment with phosphoric acid and/or is supplied from an external source. Preferably, the natural ground calcium carbonate has a weight median particle size *d*₅₀ of from 1 to 50 µm and/or the surface-reacted calcium carbonate has a volume median grain diameter *d*₅₀ of from 0.1 to 50 µm.

The following figures, examples and tests will illustrate the present invention, but are not intended to limit the invention in any way.

### Description of the figures

Fig. 1 shows a scanning electron microscope (SEM) micrograph of amorphous silica precipitate.
Fig. 2 shows a magnified section of Fig. 1.
Fig. 3 shows a scanning electron microscope (SEM) micrograph of surface-reacted calcium carbonate particles.

### Examples

### 1. Measurement methods

In the following, measurement methods implemented in the examples are described.

### BET specific surface area (SSA)

The BET specific surface area is measured via the BET process according to ISO 9277 using nitrogen, following conditioning of the sample by heating at 250°C for a period of 30 minutes. Prior to such measurements, the sample is filtered within a Büchner funnel, rinsed with deionised water and dried at 110°C in an oven for at least 12 hours.

### Particle size distribution

The volume median particle size *d*₅₀ of surface-reacted calcium carbonate was evaluated using a Malvern Mastersizer 2000 Laser Diffraction System (Malvern Instruments Plc., Great Britain). The *d*₅₀ or *d*₉₈ value, measured using a Malvern Mastersizer 2000 Laser Diffraction System, indicates a diameter value such that 50 % or 98 % by volume, respectively, of the particles have a diameter of less than this value. The raw data obtained by the measurement are analysed using the Mie theory, with a particle refractive index of 1.57 and an absorption index of 0.005.

The weight median particle size of all other particulate materials, e.g. natural ground or precipitated calcium carbonate is determined by the sedimentation method, which is an analysis of sedimentation behaviour in a gravimetric field. The measurement is made with a Sedigraph™ 5100, Micromeritics Instrument Corporation. The method and the instrument are known to the skilled person and are commonly used to determine grain size of fillers and pigments. The measurement is carried out in an aqueous solution of 0.1 wt.-% Na₄P₂O₇. The samples are dispersed using a high speed stirrer and supersonicated.

### Porosity / Pore volume

The porosity or pore volume was measured using a Micromeritics Autopore IV 9500 mercury porosimeter having a maximum applied pressure of 414 MPa (60 000 psi), equivalent to a Laplace throat diameter of 0.004 µm. The equilibration time used at each pressure step was 20 seconds. The sample material was sealed in a 5 ml chamber powder penetrometer for analysis. The data were corrected for mercury compression, penetrometer expansion and sample material compression using the software Pore-Comp (Gane, P.A.C., Kettle, J.P., Matthews, G.P. and Ridgway, C.J., "Void Space Structure of Compressible Polymer Spheres and Consolidated Calcium Carbonate Paper-Coating Formulations", Industrial and Engineering Chemistry Research, 35(5), 1996, p1753-1764.).

### 2. Materials

### Anti-caking agents

Monocalcium phosphate (MCP-M fine), (ICL Food Specialities, Distributor Omya AG, Switzerland; *d*₅₀ = 2.9 µm, *d*₉₈ = 10 µm).

Natural ground calcium carbonate (GCC) (Kemalpasa, Turkey, Omya Calcipur 110-KP, Omya AG, Switzerland; *d*₅₀ = 2.2 µm, *d*₉₈ = 9 µm).

Amorphous silica precipitate comprising agglomerates of primary nano-scale particles (silica), (*d*₅₀ = 15 µm (secondary particles)).

Calcium citrate (Ca-citrate), (produced as described in US 5,149,552; SSA = 6.2 m²/g).

Surface-reacted calcium carbonate (SRCC1) (*d*₅₀ = 7.3 µm, *d*₉₈ = 16.6 µm, SSA = 52.1 m²g⁻¹) prepared according to Example 1.

Surface-reacted calcium carbonate (SRCC2) (*d*₅₀ = 30.4 µm, *d*₉₈ = 64.6 µm, SSA = 139.5 m²g⁻¹) prepared according to Example 2.

### Particulate composition

Sea salt (Migros M classic, Migros, Switzerland).

### 3. Examples

### Example 1 - Preparation of surface-reacted calcium carbonate SRCC1

In a mixing vessel, 330 litres of an aqueous suspension of natural ground calcium carbonate was prepared by adjusting the solids content of a ground limestone calcium carbonate from Omya SAS, Orgon, having a weight based median particle size of 1.3 µm, as determined by sedimentation, such that a solids content of 10 wt.-%, based on the total weight of the aqueous suspension, was obtained.

Whilst mixing the suspension at a speed of 12.7 m/s, 10.6 kg of an aqueous solution containing 30 wt.-% phosphoric acid, based on the total weight of the aqueous solution, was added to said suspension over a period of 12 minutes at a temperature of 70°C. After the addition of the acid, the slurry was stirred for additional 5 minutes, before removing it from the vessel and drying. During acid treatment carbon dioxide was formed in situ in the aqueous suspension.

The resulting surface-reacted calcium carbonate SRCC1 had an intra-particle intruded specific pore volume of 0.871 g/cm³ for the pore diameter range of 0.004 to 0.4 µm, a volume median grain diameter (*d*₅₀) of 7.3 µm and a *d*₉₈ of 16.6 µm as measured by laser diffraction (Malvern Mastersizer 2000) and a specific surface area of 52.1 m²g⁻¹.

### Example 2 - Preparation of surface-reacted calcium carbonate SRCC2

In a mixing vessel, 10 litres of an aqueous suspension of natural ground calcium carbonate was prepared by adjusting the solids content of a ground limestone calcium carbonate from Omya SAS, Orgon, having a weight based median particle size of 1.2 µm, as determined by sedimentation, such that a solids content of 10 wt.-%, based on the total weight of the aqueous suspension, was obtained. Whilst mixing the suspension, 1.8 kg of an aqueous solution containing 30 wt.-% phosphoric acid, based on the total weight of the aqueous suspension, was added to said suspension over a period of 10 minutes at a temperature of 70°C. Additionally, starting 2 minutes after the start of phosphoric acid addition, 53 g citric acid was added in form of a solution containing 50 wt.-% citric acid, over a period of 20 seconds. After the addition of the phosphoric acid and the citric acid, the slurry was stirred for additional 5 minutes, before removing it from the vessel and drying. During the acid treatment carbon dioxide was formed in situ in the aqueous suspension.

The resulting surface-reacted calcium carbonate SRCC2 had an intra-particle intruded specific pore volume of 1.206 g/cm³ for the pore diameter range of 0.004 to 0.8 µm, a volume median grain diameter (*d*₅₀) of 30.4 µm and a *d*₉₈ of 64.6 µm as measured by laser diffraction (Malvern Mastersizer 2000) and a specific surface area of 139.5 m²g⁻¹.

### Example 3 - Caking trials

Sea salt was used as particulate composition. As can be gathered from Tables 2 and 3 below, samples were prepared by mixing the particulate composition with 1.0 wt.-% of the respective anti-caking agent, based on the total weight of the sample. As reference example, the respective particulate composition without a caking-agent was used.

10 g of each sample were put into a porcelain dish and were placed in a climate chamber (ratioTEC Prüfsysteme GmbH, Germany) for five days. The parameters of the climate chamber are given in Table 1 below.

**Table 1: Parameters of the climate chamber.**

| Time | Temperature in °C | Relative Humidity in % |
|---|---|---|
| 0 h | 15 | 69 |
| 12 h | 14 | 93 |
| 1 day | 12 | 80 |
| 2 days | 13 | 79 |
| 3 days | 12 | 85 |
| 4 days | 13 | 90 |

After each day the consistency of the particulate compositions was evaluated visually.

The results of the caking trials are listed in Tables 2 and 3 below.

**Table 2: Particulate compositions with comparative anti-caking agents.**

| Day | No anti-caking agent | 1.0 % MCP-M fine | 1.0 % GCC | 1.0 % silica | 1.0 % Ca-citrate |
|---|---|---|---|---|---|
| 1 | 5 | 5 | 5 | 2 | 3 |
| 2 | 5 | 5 | 5 | 3 | 3 |
| 3 | 5 | 5 | 5 | 3 | 3 |
| 4 | 5 | 5 | 5 | 4 | 5 |

**Table 3: Particulate composition with inventive anti-caking agents.**

| Day | 1.0 % SRCC 1 | 1.0 % SRCC 2 |
|---|---|---|
| 1 | 3 | 1 |
| 2 | 3 | 1 |
| 3 | 3 | 1 |
| 4 | 3 | 4 |

The numbers have the following meaning:
1 = powder
2 = between powder and compact
3 = half compact
4 = compact with a little separate pieces of salt
5 = compact.

As can be seen from the results compiled in Tables 2 and 3, the samples comprising the inventive anti-caking agents maintain their powdered form or remain at least in a half-compacted state, i.e. the caking is reduced. The results clearly show that the compositions have a good separation efficacy in comparison to the comparative compositions comprising conventional anti-caking agents like monocalcium phosphate (MCP-M fine), ground calcium carbonate (GCC) or calcium citrate (Ca citrate).

Only the composition comprising 1 wt.-% of amorphous silica precipitate, based on the total weight of the compositions, shows comparable good anti-caking properties. However, anti-caking agents such as amorphous silica precipitate suffer from the drawback that they are in form of aggregates or secondary particles, which in turn consist of primary nano-scale particles. Therefore, a composition comprising such an anti-caking agent may have to be labelled in the future as containing nano-scale particles on the final package, which is undesirable.

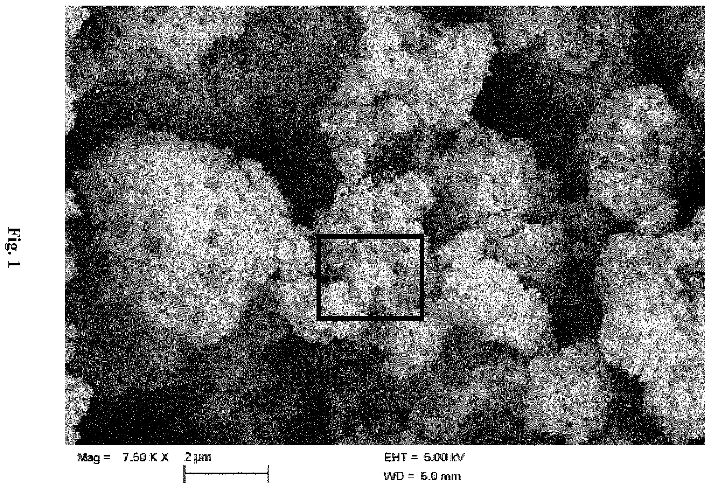

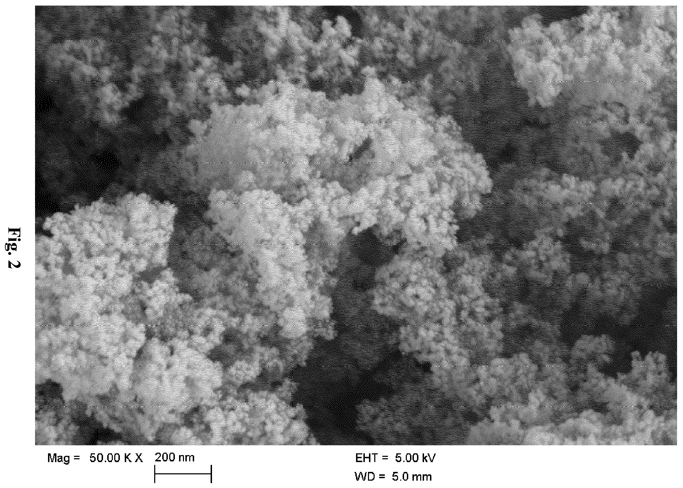

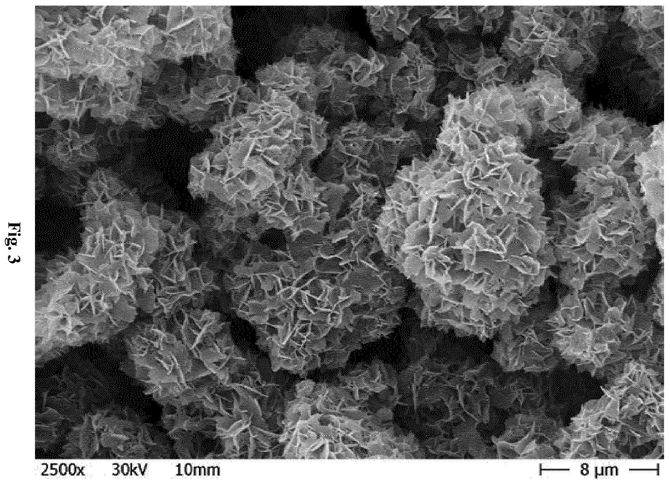

Scanning electron microscope (SEM) micrograph pictures of the amorphous silica are shown in Figs. 1 and 2. Fig. 2 is a magnified section of Fig. 1, which reveals that primary nano-size particles are agglomerated to bigger secondary particles having a particles size in the micrometre range. For comparison, Fig. 3 shows a SEM micrograph of a surface-treated calcium carbonate according to the present invention. The porous surface structure of the surface-reacted calcium carbonate is clearly visible and it can be gathered from Fig. 3 that nano-size particles are not present.

The results of the caking trials confirm that surface-reacted calcium carbonate according to the present invention provide good anti-caking properties at already low amounts.

## Claims

1. Use of a surface-reacted calcium carbonate as anti-caking agent,
wherein the surface-reacted calcium carbonate is a reaction product of natural ground or precipitated calcium carbonate with carbon dioxide and at least one acid in an aqueous medium,
wherein the at least one acid is selected from the group consisting of hydrochloric acid, sulphuric acid, sulphurous acid, phosphoric acid, citric acid, oxalic acid, acetic acid, formic acid, and mixtures thereof,
wherein the carbon dioxide is formed in situ by the acid treatment and/or is supplied from an external source and
wherein the surface-reacted calcium carbonate particles have a volume median grain diameter *d*₅₀ of from 0.1 to 50 µm.

2. Use according to claim 1,
wherein the natural ground calcium carbonate is selected from calcium carbonate containing minerals, preferably selected from the group consisting of marble, chalk, dolomite, limestone, and mixtures thereof.

3. Use according to claim 1,
wherein the precipitated calcium carbonate is selected from the group consisting of precipitated calcium carbonates having aragonitic, vateritic or calcitic mineralogical crystal forms, and mixtures thereof.

4. Use according to any one of the preceding claims,
wherein the surface-reacted calcium carbonate has a specific surface area of from 1 m²/g to 200 m²/g, preferably from 20 m²/g to 180 m²/g, more preferably from 30 m²/g to 160 m²/g, even more preferably from 40 m²/g to 150 m²/g, and most preferably from 50 m²/g to 140 m²/g, measured using nitrogen and the BET method according to ISO 9277.

5. Use according to any one of the preceding claims,
wherein the surface-reacted calcium carbonate particles have a volume median grain diameter *d*₅₀ of from 0.5 to 25 µm, preferably from 0.8 to 20 µm, even more preferably from 1 to 10 µm, and most preferably from 4 to 8 µm.

6. Use according to any one of the preceding claims,
wherein the surface-reacted calcium carbonate has an intra-particle intruded specific pore volume within the range of 0.150 to 1.300 cm³/g, preferably of 0.300 to 1.250 cm³/g, and most preferably of 0.400 to 1.210 cm³/g, calculated from a mercury intrusion porosimetry measurement.

7. Use according to any one of the preceding claims,
wherein the at least one acid is selected from the group consisting of hydrochloric acid, sulphuric acid, sulphurous acid, phosphoric acid, oxalic acid, and mixtures thereof, and preferably the at least one acid is phosphoric acid or a mixture of phosphoric acid and citric acid.

8. Use according to any one of the preceding claims,
wherein the anti-caking agent is used in a composition selected from the group consisting of a food composition, a feed composition, a nutraceutical composition and a cosmetic composition, and preferably the composition is selected from a food composition or a feed composition.

9. Use according to claim 8,
wherein the food composition is food salt, curing salt, salt substitute, milk powder, skimmed milk powder, cream powder, egg powder, whey fat powder, protein powder, vending machine powder, grated cheese, sugar, powdered food flavour, spice, seasoning, packet soup mixture, baking mixture, pudding powder, mousse powder, or sauce powder.

10. Use according to claim 8,
wherein the feed composition is pet food, milk replacer for animals, or mineral salt for animals.

11. Method for controlling, reducing or preventing caking of a particulate composition,
the method comprising the step of adding to a particulate composition a surface-reacted calcium carbonate,
wherein the surface-reacted calcium carbonate is a reaction product of natural ground or precipitated calcium carbonate with carbon dioxide and at least one acid in an aqueous medium, wherein the at least one acid is selected from the group consisting of hydrochloric acid, sulphuric acid, sulphurous acid, phosphoric acid, citric acid, oxalic acid, acetic acid, formic acid, and mixtures thereof, wherein the carbon dioxide is formed in situ by the acid treatment and/or is supplied from an external source and wherein the surface-reacted calcium carbonate particles have a volume median grain diameter *d*₅₀ of from 0.1 to 50 µm.

12. A composition comprising an anti-caking agent,
wherein the anti-caking agent contains surface-reacted calcium carbonate, wherein the surface-reacted calcium carbonate is a reaction product of natural ground or precipitated calcium carbonate with carbon dioxide and at least one acid in an aqueous medium, wherein the at least one acid is selected from the group consisting of hydrochloric acid, sulphuric acid, sulphurous acid, phosphoric acid, citric acid, oxalic acid, acetic acid, formic acid, and mixtures thereof, wherein the carbon dioxide is formed in situ by the acid treatment and/or is supplied from an external source and
wherein the surface-reacted calcium carbonate particles have a volume median grain diameter *d*₅₀ of from 0.1 to 50 µm,
wherein the composition is selected from the group consisting of a food composition, a feed composition, a nutraceutical composition and a cosmetic composition, wherein the food composition is not a chewable gum.

13. Method for the production of a composition,
the method comprising the step of mixing a surface-reacted calcium carbonate with a composition selected from the group consisting of a food composition, a feed composition, a nutraceutical composition and a cosmetic composition, wherein the food composition is not a chewable gum, and
wherein the surface-reacted calcium carbonate is a reaction product of natural ground or precipitated calcium carbonate with carbon dioxide and at least one acid in an aqueous medium, wherein the at least one acid is selected from the group consisting of hydrochloric acid, sulphuric acid, sulphurous acid, phosphoric acid, citric acid, oxalic acid, acetic acid, formic acid, and mixtures thereof, wherein the carbon dioxide is formed in situ by the acid treatment and/or is supplied from an external source and wherein the surface-reacted calcium carbonate particles have a volume median grain diameter *d*₅₀ of from 0.1 to 50 µm.

## Patentansprüche

1. Verwendung eines Calciumcarbonats, das an der Oberfläche eine Reaktion eingegangen ist, als Trennmittel, wobei das Calciumcarbonat, das an der Oberfläche eine Reaktion eingegangen ist, ein Reaktionsprodukt von natürlichem vermahlenem oder synthetischem Calciumcarbonat mit Kohlenstoffdioxid und wenigstens einer Säure in einem wässrigen Medium ist,
wobei die wenigstens eine Säure ausgewählt ist aus der Gruppe bestehend aus Salzsäure, Schwefelsäure, schwefliger Säure, Phosphorsäure, Zitronensäure, Oxalsäure, Essigsäure, Ameisensäure, sowie Gemischen davon,
wobei das Kohlenstoffdioxid in situ durch die Säurebehandlung gebildet und/oder aus einer externen Quelle zugeführt wird, und
wobei die Calciumcarbonatpartikel, die an der Oberfläche eine Reaktion eingegangen sind, einen volumengemittelten Korndurchmesser *d*₅₀ von 0,1 bis 50 µm aufweisen.

2. Verwendung nach Anspruch 1, bei der das natürliche vermahlene Calciumcarbonat ausgewählt ist aus Calciumcarbonat enthaltenden Mineralien, bevorzugt ausgewählt aus der Gruppe bestehend aus Marmor, Kreide, Dolomit, Kalkstein, sowie Gemischen davon.

3. Verwendung nach Anspruch 1, bei der das gefällte Calciumcarbonat ausgewählt ist aus der Gruppe bestehend aus gefällten Calciumcarbonaten mit aragonitischen, vateritischen oder calcitischen mineralogischen Kristallformen, sowie Gemischen davon.

4. Verwendung nach einem der vorhergehenden Ansprüche, bei der das Calciumcarbonat, das an der Oberfläche eine Reaktion eingegangen ist, eine spezifische Oberfläche von 1 m²/g bis 200 m²/g aufweist, bevorzugt von 20 m²/g bis 180 m²/g, bevorzugter von 30 m²/g bis 160 m²/g, noch bevorzugter von 40 m²/g bis 150 m²/g und am meisten bevorzugt von 50 m²/g bis 140 m²/g, gemessen durch Verwenden von Stickstoff und dem BET-Verfahren gemäss ISO 9277.

5. Verwendung nach einem der vorhergehenden Ansprüche, bei der die Calciumcarbonatpartikel, die an der Oberfläche eine Reaktion eingegangen sind, einen volumengemittelten Korndurchmesser *d*₅₀ von 0,5 bis 25 µm aufweisen, bevorzugt von 0,8 bis 20 µm, noch bevorzugter von 1 bis 10 µm, und am meisten bevorzugt von 4 bis 8 µm.

6. Verwendung nach einem der vorhergehenden Ansprüche, bei der das Calciumcarbonat, das an der Oberfläche eine Reaktion eingegangen ist, ein spezifisches Intrapartikeleindringporenvolumen im Bereich von 0,150 bis 1,300 cm³/g aufweist, bevorzugt von 0,300 bis 1,250 cm³/g, und am meisten bevorzugt von 0,400 bis 1,210 cm³/g, berechnet aus einer Quecksilbereindringungsporositätsmessung.

7. Verwendung nach einem der vorhergehenden Ansprüche, bei der die wenigstens eine Säure ausgewählt ist aus der Gruppe bestehend aus Salzsäure, Schwefelsäure, schwefliger Säure, Phosphorsäure, Oxalsäure, sowie Gemischen davon, und bevorzugt ist die wenigstens eine Säure Phosphorsäure oder ein Gemisch aus Phosphorsäure und Zitronensäure.

8. Verwendung nach einem der vorhergehenden Ansprüche, bei der das Trennmittel verwendet wird in einer Zusammensetzung ausgewählt aus der Gruppe bestehend aus einer Lebensmittelzusammensetzung, einer Mastfutterzusammensetzung, einer Nahrungsmittelergänzungszusammensetzung und einer Kosmetikzusammensetzung, und bevorzugt ist die Zusammensetzung ausgewählt aus einer Lebensmittelzusammensetzung oder einer Mastfutterzusammensetzung.

9. Verwendung nach Anspruch 8, bei der die Lebensmittelzusammensetzung Speisesalz, Pökelsalz, Salzersatz, Milchpulver, Magermilchpulver, Cremepulver, Eipulver, Molkepulver, Proteinpulver, Getränkeautomatenpulver, Reibkäse, Zucker, Geschmacksverstärkerpulver, Gewürz, Würzmittel, Tütensuppenmischung, Backmischung, Puddingpulver, Moussepulver oder Saucenpulver ist.

10. Verwendung nach Anspruch 8, bei der die Mastfutterzusammensetzung Tiernahrung, Milchersatz für Tiere, oder Mineralsalze für Tiere ist.

11. Verfahren zum Kontrollieren, Verringern oder Verhindern von Zusammenbacken einer partikulären Zusammensetzung, wobei das Verfahren den Schritt des Zugebens eines Calciumcarbonats, das an der Oberfläche eine Reaktion eingegangen ist, zu einer partikulären Zusammensetzung umfasst, wobei das Calciumcarbonat, das an der Oberfläche eine Reaktion eingegangen ist, ein Reaktionsprodukt von natürlichem vermahlenem oder synthetischem Calciumcarbonat mit Kohlenstoffdioxid und wenigstens einer Säure in einem wässrigen Medium ist, wobei die wenigstens eine Säure ausgewählt ist aus der Gruppe bestehend aus Salzsäure, Schwefelsäure, schwefliger Säure, Phosphorsäure, Zitronensäure, Oxalsäure, Essigsäure, Ameisensäure, sowie Gemischen davon, wobei das Kohlenstoffdioxid in situ durch die Säurebehandlung gebildet und/oder aus einer externen Quelle zugeführt wird, und
wobei die Calciumcarbonatpartikel, die an der Oberfläche eine Reaktion eingegangen sind, einen volumengemittelten Korndurchmesser *d*₅₀ von 0,1 bis 50 µm aufweisen.

12. Zusammensetzung, umfassend ein Trennmittel,
wobei das Trennmittel Calciumcarbonat, das an der Oberfläche eine Reaktion eingegangen ist, enthält,
wobei das Calciumcarbonat, das an der Oberfläche eine Reaktion eingegangen ist, ein Reaktionsprodukt von natürlichem vermahlenem oder synthetischem Calciumcarbonat mit Kohlenstoffdioxid und wenigstens einer Säure in einem wässrigen Medium ist,
wobei die wenigstens eine Säure ausgewählt ist aus der Gruppe bestehend aus Salzsäure, Schwefelsäure, schwefliger Säure, Phosphorsäure, Zitronensäure, Oxalsäure, Essigsäure, Ameisensäure, sowie Gemischen davon, wobei das Kohlenstoffdioxid in situ durch die Säurebehandlung gebildet und/oder aus einer externen Quelle zugeführt wird, und
wobei die Calciumcarbonatpartikel, die an der Oberfläche eine Reaktion eingegangen sind, einen volumengemittelten Korndurchmesser *d*₅₀ von 0,1 bis 50 µm aufweisen,
wobei die Zusammensetzung ausgewählt ist aus der Gruppe bestehend aus einer Lebensmittelzusammensetzung, einer Mastfutterzusammensetzung, einer Nahrungsmittelergänzungszusammensetzung und einer Kosmetikzusammensetzung, wobei die Lebensmittelzusammensetzung kein Kaugummi ist.

13. Verfahren zur Herstellung einer Zusammensetzung,
wobei das Verfahren den Schritt umfasst des Vermischens eines Calciumcarbonats, das an der Oberfläche eine Reaktion eingegangen ist, mit einer Zusammensetzung, ausgewählt aus der Gruppe bestehend aus einer Lebensmittelzusammensetzung, einer Mastfutterzusammensetzung, einer Nahrungsmittelergänzungszusammensetzung und einer Kosmetikzusammensetzung, wobei die Lebensmittelzusammensetzung kein Kaugummi ist, und
wobei das Calciumcarbonat, das an der Oberfläche eine Reaktion eingegangen ist, ein Reaktionsprodukt von natürlichem vermahlenem oder synthetischem Calciumcarbonat mit Kohlenstoffdioxid und wenigstens einer Säure in einem wässrigen Medium ist,
wobei die wenigstens eine Säure ausgewählt ist aus der Gruppe bestehend aus Salzsäure, Schwefelsäure, schwefliger Säure, Phosphorsäure, Zitronensäure, Oxalsäure, Essigsäure, Ameisensäure, sowie Gemischen davon, wobei das Kohlenstoffdioxid in situ durch die Säurebehandlung gebildet und/oder aus einer externen Quelle zugeführt wird, und
wobei die Calciumcarbonatpartikel, die an der Oberfläche eine Reaktion eingegangen sind, einen volumengemittelten Korndurchmesser *d*₅₀ von 0,1 bis 50 µm aufweisen.

## Revendications

1. Utilisation d'un carbonate de calcium ayant réagi en surface en tant qu'agent anti-agglomérant,
dans laquelle le carbonate de calcium ayant réagi en surface est un produit réactionnel de carbonate de calcium broyé naturel ou précipité avec du dioxyde de carbone et au moins un acide dans un milieu aqueux,
dans laquelle l'au moins un acide est choisi dans le groupe constitué par l'acide chlorhydrique, l'acide sulfurique, l'acide sulfureux, l'acide phosphorique, l'acide citrique, l'acide oxalique, l'acide acétique, l'acide formique et des mélanges de ceux-ci,
dans laquelle le dioxyde de carbone est formé in situ par traitement acide et/ou est fourni par une source externe et
dans laquelle les particules de carbonate de calcium ayant réagi en surface ont un diamètre de grain médian en volume *d*₅₀ de 0,1 à 50 µm.

2. Utilisation selon la revendication 1,
dans laquelle le carbonate de calcium broyé naturel est choisi parmi les minéraux contenant du carbonate de calcium, de préférence choisi dans le groupe constitué par le marbre, la craie, la dolomie, le calcaire et des mélanges de ceux-ci.

3. Utilisation selon la revendication 1,
dans laquelle le carbonate de calcium précipité est choisi dans le groupe constitué par les carbonates de calcium précipités ayant des formes cristallines minéralogiques aragonitiques, vatéritiques ou calciques, et des mélanges de ceux-ci.

4. Utilisation selon l'une quelconque des revendications précédentes,
dans laquelle le carbonate de calcium ayant réagi en surface a une surface spécifique de 1 m²/g à 200 m²/g, de préférence de 20 m²/g à 180 m²/g, plus préférablement de 30 m²/g à 160 m²/g, encore plus préférablement de 40 m²/g à 150 m²/g, et de manière préférée entre toutes de 50 m²/g à 140 m²/g, mesurée à l'aide d'azote et de la méthode BET selon la norme ISO 9277.

5. Utilisation selon l'une quelconque des revendications précédentes,
dans laquelle les particules de carbonate de calcium ayant réagi en surface ont un diamètre de grain médian en volume *d*₅₀ de 0,5 à 25 µm, de préférence de 0,8 à 20 µm, encore plus préférablement de 1 à 10 µm et de manière préférée entre toutes de 4 à 8 µm.

6. Utilisation selon l'une quelconque des revendications précédentes,
dans laquelle le carbonate de calcium ayant réagi en surface a un volume de pores spécifique immiscé intraparticulaire compris dans la plage allant de 0,150 à 1,300 cm³/g, de préférence de 0,300 à 1,250 cm³/g, et de manière préférée entre toutes de 0,4 à 1,210 cm³/g, calculé à partir d'une mesure de porosimétrie par intrusion de mercure.

7. Utilisation selon l'une quelconque des revendications précédentes,
dans laquelle l'au moins un acide est choisi dans le groupe constitué par l'acide chlorhydrique, l'acide sulfurique, l'acide sulfureux, l'acide phosphorique, l'acide oxalique et des mélanges de ceux-ci, et de préférence l'au moins un acide est l'acide phosphorique ou un mélange d'acide phosphorique et d'acide citrique.

8. Utilisation selon l'une quelconque des revendications précédentes,
dans laquelle l'agent anti-agglomérant est utilisé dans une composition choisie dans le groupe constitué par une composition alimentaire, une composition alimentaire pour animaux, une composition nutraceutique et une composition cosmétique, et de préférence la composition est choisie parmi une composition alimentaire ou une composition alimentaire pour animaux.

9. Utilisation selon la revendication 8,
dans laquelle la composition alimentaire est du sel alimentaire, du sel de salage, un substitut du sel, du lait en poudre, du lait écrémé en poudre, de la crème en poudre, des oeufs en poudre, du lactosérum en poudre, des protéines en poudre, des poudres pour distributeur, du fromage râpé, du sucre, des agents aromatisants pour aliments en poudre, des épices, un assaisonnement, un mélange de soupe en sachet, un mélange pour gâteau, un dessert en poudre, une mousse en poudre ou une sauce en poudre.

10. Utilisation selon la revendication 8,
dans laquelle la composition alimentaire pour animaux est une alimentation pour animaux domestiques, un substitut de lait pour animaux ou un sel minéral pour animaux.

11. Procédé pour contrôler, réduire ou empêcher l'agglomération d'une composition particulaire,
le procédé comprenant l'étape consistant à ajouter à une composition particulaire un carbonate de calcium ayant réagi en surface,
dans lequel le carbonate de calcium ayant réagi en surface est un produit réactionnel de carbonate de calcium broyé naturel ou précipité avec du dioxyde de carbone et au moins un acide dans un milieu aqueux,
dans lequel l'au moins un acide est choisi dans le groupe constitué par l'acide chlorhydrique, l'acide sulfurique, l'acide sulfureux, l'acide phosphorique, l'acide citrique, l'acide oxalique, l'acide acétique, l'acide formique et des mélanges de ceux-ci,
dans lequel le dioxyde de carbone est formé in situ par traitement acide et/ou est fourni par une source externe et
dans lequel les particules de carbonate de calcium ayant réagi en surface ont un diamètre de grain médian en volume *d*₅₀ de 0,1 à 50 µm.

12. Composition comprenant un agent anti-agglomérant,
dans laquelle l'agent anti-agglomérant contient du carbonate de calcium carbonate de calcium ayant réagi en surface,
dans laquelle le carbonate de calcium ayant réagi en surface est un produit réactionnel de carbonate de calcium broyé naturel ou précipité avec du dioxyde de carbone et au moins un acide dans un milieu aqueux,
dans laquelle l'au moins un acide est choisi dans le groupe constitué par l'acide chlorhydrique, l'acide sulfurique, l'acide sulfureux, l'acide phosphorique, l'acide citrique, l'acide oxalique, l'acide acétique, l'acide formique et des mélanges de ceux-ci,
dans laquelle le dioxyde de carbone est formé in situ par traitement acide et/ou étant fourni par une source externe et
dans laquelle les particules de carbonate de calcium ayant réagi en surface ont un diamètre de grain médian en volume *d*₅₀ de 0,1 à 50 µm,
la composition étant choisie dans le groupe constitué par une composition alimentaire, une composition alimentaire pour animaux, une composition nutraceutique et une composition cosmétique, la composition alimentaire n'étant pas une gomme à mâcher.

13. Procédé de production d'une composition,
le procédé comprenant l'étape consistant à mélanger un carbonate de calcium ayant réagi en surface avec une composition choisie dans le groupe constitué par une composition alimentaire, une composition alimentaire pour animaux, une composition nutraceutique et une composition cosmétique, la composition alimentaire n'étant pas une gomme à mâcher, et
dans lequel le carbonate de calcium ayant réagi en surface est un produit réactionnel de carbonate de calcium broyé naturel ou précipité avec du dioxyde de carbone et au moins un acide dans un milieu aqueux,
dans lequel l'au moins un acide est choisi dans le groupe constitué par l'acide chlorhydrique, l'acide sulfurique, l'acide sulfureux, l'acide phosphorique, l'acide citrique, l'acide oxalique, l'acide acétique, l'acide formique et des mélanges de ceux-ci,
dans lequel le dioxyde de carbone étant formé in situ par traitement acide et/ou étant fourni par une source externe et
dans lequel les particules de carbonate de calcium ayant réagi en surface ont un diamètre de grain médian en volume *d₅₀* de 0,1 à 50 µm.
